# EUROPEAN PATENT APPLICATION

(11) **EP 4 057 419 A1**
(43) Date of publication of application: **14.09.2022**
(21) Application number: 20892833.3
(22) Date of filing: 02.11.2020
(51) Int. Cl.: H01M 10/44, H02J 7/00

(54) **CHARGING METHOD AND DEVICE TO BE CHARGED**

(30) Priority: 26.11.2019 CN 201911175246
(71) Applicant: GUANGDONG OPPO MOBILE TELECOMMUNICATIONS CORP., LTD., Dongguan, Guangdong 523860 (CN)
(72) Inventor: CHEN, Wei, Dongguan, Guangdong 523860 (CN)
(74) Representative: Taor, Simon Edward William
(86) International application number: PCT/CN2020/125975
(87) International publication number: WO 2021/103951

(57) **Abstract**

Provided are a charging method and a device to be charged. The method comprises: acquiring the charging duration, in a predetermined charging stage during at least one previous charging process, of a battery in a device to be charged; comparing the charging duration with a preset duration threshold value; and on the basis of a comparison result of the charging duration and the duration threshold value, determining whether to adjust a charging parameter for the battery in a constant-current charging stage, so as to prolong the charging duration in the constant-current charging stage. The method can solve the problem of a charging speed slowing down when a battery has aged.

## Description

### FIELD OF DISCLOSURE

The present disclosure relates to the technical field of electronic devices, and in particular, to a charging method and a device to be charged.

### BACKGROUND

Electronic devices (e.g., smart devices such as smartphones, tablets, etc.) are increasingly favored by consumers, but these electronic devices consume a lot of power and need to be charged frequently. It usually takes several hours to charge these devices to be charged using a low-power ordinary charging scheme. To cope with this challenge, the industry has successively proposed rapid charging schemes based on ordinary charging.

When a battery is rapidly charged, as the battery is repeatedly charged and discharged, it will gradually age, and its impedance will become larger and larger, which will cause the battery to quickly reach a cut-off voltage. As a result, a charging time becomes longer.

It should be noted that information disclosed in the above Background section is only for enhancement of understanding of the background of the present disclosure, and thus may include information that does not constitute the prior art known to those skilled in the art.

### SUMMARY OF DISCLOSURE

A purpose of the present disclosure is to provide a charging method and a device to be charged. At least to a certain extent, a problem that a charging speed of an electronic device is slowed down due to a limitation of a related technology is overcome.

Other features and advantages of the present disclosure will become apparent from the following detailed description, or be learned in part by practice of the present disclosure.

According to one aspect of the present disclosure, a charging method is provided, including a step for acquiring a charging duration of a battery in a device to be charged in a previous at least one charging process in a predetermined charging stage. The method also includes a step for comparing the charging duration to a preset duration threshold. The method also includes a step for determining whether to adjust a charging parameter of the battery in a constant current charging stage based on a comparison result of the charging duration and the duration threshold, so as to extend a charging duration of the constant current charging stage.

According to one embodiment of the present disclosure, the predetermined charging stage is a constant voltage charging stage. The determining whether to adjust the charging parameter of the battery in the constant current charging stage based on the comparison result of the charging duration and the duration threshold to extend the charging duration of the constant current charging stage includes in response to determining that the charging duration is greater than or equal to the duration threshold, adjusting the charging parameter of the battery in the constant current charging stage to extend the charging duration of the constant current charging stage. The adjusting the charging parameter of the battery in the constant current charging stage includes reducing a charging current of the constant current charging stage and/or increasing a cut-off voltage of the constant current charging stage.

According to one embodiment of the present disclosure, the constant current charging stage includes a plurality of constant current sub-stages, and in each of the constant current sub-stages, the battery includes a respective charging current and a corresponding cut-off voltage. The adjusting the charging parameter of the battery in the constant current charging stage includes adjusting the charging parameter of the battery in a last constant current sub-stage of the plurality of constant current sub-stages.

According to one embodiment of the present disclosure, the charging parameter includes a charging current. The adjusting the charging parameter of the battery in the last constant current sub-stage of the plurality of constant current sub-stages includes reducing the charging current of the battery in the last constant current sub-stage.

According to one embodiment of the present disclosure, the charging parameter includes a cut-off voltage. The adjusting the charging parameter of the battery in the last constant current sub-stage of the plurality of constant current sub-stages includes increasing the cut-off voltage of the battery in the last constant current sub-stage.

According to one embodiment of the present disclosure, the charging parameter includes a charging current and a cut-off voltage. The adjusting the charging parameter of the battery in the last constant current sub-stage of the plurality of constant current sub-stages includes reducing the charging current of the battery in the last constant current sub-stage, and increasing the cut-off voltage of the battery in the last constant current sub-stage.

According to one embodiment of the present disclosure, the method further includes a step of in response to the cut-off voltage of the constant current charging stage being increased to a preset cut-off voltage threshold, the cut-off voltage of the constant current charging stage is no longer increased.

According to one embodiment of the present disclosure, the method further includes a step of in response to the charging current of the constant current charging stage being decreased to a preset charging current threshold, the charging current of the constant current charging stage is no longer decreased.

According to one embodiment of the present disclosure, the duration threshold is preset to different values based on different temperature intervals. Before comparing the charging duration to the preset duration threshold, the method further includes steps of acquiring a current temperature of the battery, and selecting the duration threshold corresponding to the temperature.

According to one embodiment of the present disclosure, the acquiring the charging duration of the battery in the device to be charged in the previous at least one charging process in the predetermined charging stage includes acquiring a plurality of charging durations of the battery in previously consecutive multiple charging processes in the predetermined charging stage. In response to determining that the charging duration is greater than or equal to the duration threshold, the adjusting the charging parameter of the battery in the constant current charging stage includes adjusting the charging parameter of the battery in the constant current charging stage in response to determining that the plurality of the charging durations are all greater than or equal to the duration threshold.

According to one embodiment of the present disclosure, the predetermined charging stage is the constant current charging stage. The determining whether to adjust the charging parameter of the battery in the constant current charging stage based on the comparison result of the charging duration and the duration threshold to extend the charging duration of the constant current charging stage includes adjusting the charging parameter of the battery in the constant current charging stage to extend the charging duration of the constant current charging stage in response to determining that the charging duration is less than or equal to the duration threshold. The adjusting the charging parameter of the battery in the constant current charging stage includes reducing a charging current of the constant current charging stage and/or increasing a cut-off voltage of the constant current charging stage.

According to one embodiment of the present disclosure, the constant current charging stage includes a plurality of constant current sub-stages. In each of the constant current sub-stages, the battery includes a respective charging current and a corresponding cut-off voltage. The charging duration is a charging duration of a last constant current sub-stage of the plurality of constant current sub-stages.

According to another aspect of the present disclosure, a device to be charged is provided, including: a battery and a control module. The control module is connected to the battery, and is configured to acquire a charging duration of the battery in a previous at least one charging process in a predetermined charging stage, to compare the charging duration to a preset duration threshold, and to determine whether to adjust a charging parameter of the battery in a constant current charging stage based on a comparison result of the charging duration and the duration threshold, so as to extend a charging duration of the constant current charging stage.

According to one embodiment of the present disclosure, the predetermined charging stage is a constant voltage charging stage. In response to determining that the charging duration is greater than or equal to the duration threshold, the control module is configured to reduce a charging current of the battery in the constant current charging stage and/or to increase a cut-off voltage of the battery in the constant current charging stage to extend the charging duration of the constant current charging stage.

According to one embodiment of the present disclosure, the constant current charging stage includes a plurality of constant current sub-stages. In each of the constant current sub-stages, the battery includes a respective charging current and a corresponding cut-off voltage. The control module is configured to adjust the charging parameter of the battery in a last constant current sub-stage of the plurality of constant current sub-stages.

According to one embodiment of the present disclosure, the charging parameter includes a charging current, and the control module is configured to reduce the charging current of the battery in the last constant current sub-stage.

According to one embodiment of the present disclosure, the charging parameter includes a cut-off voltage, and the control module is configured to increase the cut-off voltage of the battery in the last constant current sub-stage.

According to one embodiment of the present disclosure, the charging parameter includes a charging current and a cut-off voltage, and the control module is configured to reduce the charging current of the battery in the last constant current sub-stage, and to increase the cut-off voltage of the battery in the last constant current sub-stage.

According to one embodiment of the present disclosure, in response to the cut-off voltage of the constant current charging stage being increased to a preset cut-off voltage threshold, the control module is further configured to no longer increase the cut-off voltage of the constant current charging stage.

According to one embodiment of the present disclosure, in response to the charging current of the constant current charging stage being decreased to a preset charging current threshold, the control module is further configured to no longer decrease the charging current of the constant current charging stage.

According to one embodiment of the present disclosure, the duration threshold is preset to different values based on different temperature intervals. The device to be charged further includes a detection module connected with the battery and the control module, and configured to detect a temperature of the battery. The control module is further configured to acquire the current temperature of the battery detected by the detection module, and to select the duration threshold corresponding to the temperature.

According to one embodiment of the present disclosure, the control module is configured to acquire a plurality of charging durations of the battery in previously consecutive multiple charging processes in the predetermined charging stage. In response to determining that the plurality of the charging durations are all greater than or equal to the duration threshold, the control module is configured to reduce the charging current of the battery in the constant current charging stage and/or to increase the cut-off voltage of the battery in the constant current charging stage.

According to one embodiment of the present disclosure, in response to determining that the charging duration is less than or equal to the duration threshold, the control module is configured to reduce the charging current in the constant current charging stage and/or to increase the cut-off voltage in the constant current charging stage to extend the charging duration of the constant current charging stage.

According to one embodiment of the present disclosure, the constant current charging stage includes a plurality of constant current sub-stages, and in each of the constant current sub-stages, the battery includes a respective charging current and a corresponding cut-off voltage. The charging duration is a charging duration of a last constant current sub-stage of the plurality of constant current sub-stages.

According to one embodiment of the present disclosure, the charging parameter includes a charging current and/or a cut-off voltage.

According to the charging method of the embodiments of the present disclosure, by calculating and storing the charging duration of battery in each previous charging process in the predetermined charging stage, an adjustment basis is provided for whether the charging parameter of the constant current charging stage needs to be adjusted during current charging. Thus, the charging duration of the constant current charging stage can be extended, and a charging speed of the battery can be increased. This method allows the battery to be charged at a faster charging speed even if the battery is aged.

It is to be understood that the foregoing general description and the following detailed description are exemplary and explanatory only and are not restrictive of the present disclosure.

### BRIEF DESCRIPTION OF DRAWINGS

The accompanying drawings, which are incorporated in and constitute a part of this specification, illustrate embodiments consistent with the disclosure and together with the description serve to explain principles of the disclosure. Obviously, the accompanying drawings in the following description are only some embodiments of the present disclosure, and for those of ordinary skill in the art, other drawings can also be obtained from these drawings without creative effort.
FIG. 1 exemplarily illustrates a schematic diagram of a segmented constant current charging stage and a constant voltage charging stage.
FIG. 2 exemplarily illustrates a flowchart of a charging method in an embodiment of the present disclosure.
FIG. 3 exemplarily illustrates a flowchart of a charging method in another embodiment of the present disclosure.
FIG. 4 exemplarily illustrates a flowchart of a charging method in a further embodiment of the present disclosure.
FIG. 5 exemplarily illustrates a block diagram of a device to be charged in an embodiment of the present disclosure.
FIG. 6 exemplarily illustrates a schematic diagram of an application scenario of device to be charged in an embodiment of the present disclosure.
FIG. 7 exemplarily illustrates a schematic diagram of another application scenario of the device to be charged in an embodiment of the present disclosure.
FIG. 8 exemplarily illustrates a block diagram of an electronic device in an embodiment of the present disclosure.
FIG. 9 exemplarily illustrates a schematic diagram of a computer-readable storage medium in an embodiment of the present disclosure.

### DETAILED DESCRIPTION

The exemplary embodiments will now be described more comprehensively with reference to the accompanying drawings. However, the exemplary embodiments may be implemented in various forms, and should not be understood as examples limited to the description herein. On the contrary, providing these embodiments makes the present disclosure more comprehensive and complete, and fully conveys the concept of the exemplary embodiments to those skilled in the art. Features, structures, or characteristics described herein may be combined in one or a plurality of embodiments in any suitable manner.

The drawings are only schematic illustrations of the present disclosure, and are not necessarily drawn proportionally. The same reference numerals in the drawings represent the same or similar parts, and thus repeated description will be omitted. Some of the block diagrams illustrated in the drawings are functional entities, which do not necessarily have to correspond to a physically or logically separate entity. These functional entities may be implemented in software, or in one or more hardware modules or integrated circuits, or be implemented in different networks and/or processor devices and/or microcontroller devices.

In the present disclosure, unless otherwise expressly specified and limited, terms, such as "connected", "connected", etc., should be interpreted in a broad sense, for example, it may be a fixed connection, a detachable connection, or an integral body; it may be a mechanical connection, an electrical connection, or mutual communication; it may be a direct connection, or an indirect connection through an intermediate medium, and it may also be the internal communication between the two elements or the interaction relationship between the two elements. For those of ordinary skill in the art, the specific meanings of the above terms in the present disclosure can be understood according to specific situations.

Furthermore, in the description of the present disclosure, "a plurality" or "a plurality of times" means at least two or two times, such as two or two times, three or three times, etc., unless expressly and specifically defined otherwise.

First, a constant current constant voltage (CCCV) charging method is explained:

Charging processes of a battery may include: a trickle charging stage (or mode), a constant current charging stage (or mode), a constant voltage charging stage (or mode), and a supplementary charging stage (or mode).

In the trickle charging stage, pre-charging (that is, recovery charging) is firstly performed on a fully discharged battery. A current of trickle charging is usually one-tenth of a current of constant current charging. When the voltage of the battery rises above a voltage threshold of the trickle charging, a charging current will be increased to enter the constant current charging stage.

In the constant current charging stage, the battery is charged with a constant current, and the charging voltage rises rapidly. When the charging voltage reaches an expected charging voltage threshold of the battery, it will switch to the constant voltage charging stage. The constant current is usually a rated charging rate current.

In the constant voltage charging stage, the battery is charged with a constant voltage, and the charging current gradually decreases. When the charging current drops to a preset current threshold, the battery is fully charged.

After the battery is fully charged, some current loss will be generated due to an influence of self-discharging of the battery. At this time, it will enter the supplementary charging stage. In the supplementary charging stage, the charging current is very small just to ensure that the battery is at a full-charge condition.

Furthermore, the constant current charging stage may be charged by a multi-stage constant current charging method.

The multi-stage constant current charging may have M constant current sub-stages (M is an integer not less than 2), and the multi-stage constant current charging starts a first sub-stage of charging with a predetermined charging current, and the M constant current stages of the multi-stage constant current charging are executed sequentially from the first stage to the M-th stage. After the constant current charging is switched from one constant current sub-stage to the next constant current sub-stage, the value of the current may be decreased. The constant current stage is switched to the next constant current sub-stage when the voltage of the battery reaches a cut-off voltage corresponding to the constant current sub-stage. The current conversion process between two adjacent constant current sub-stages may be gradual or may be in a stepped skip manner.

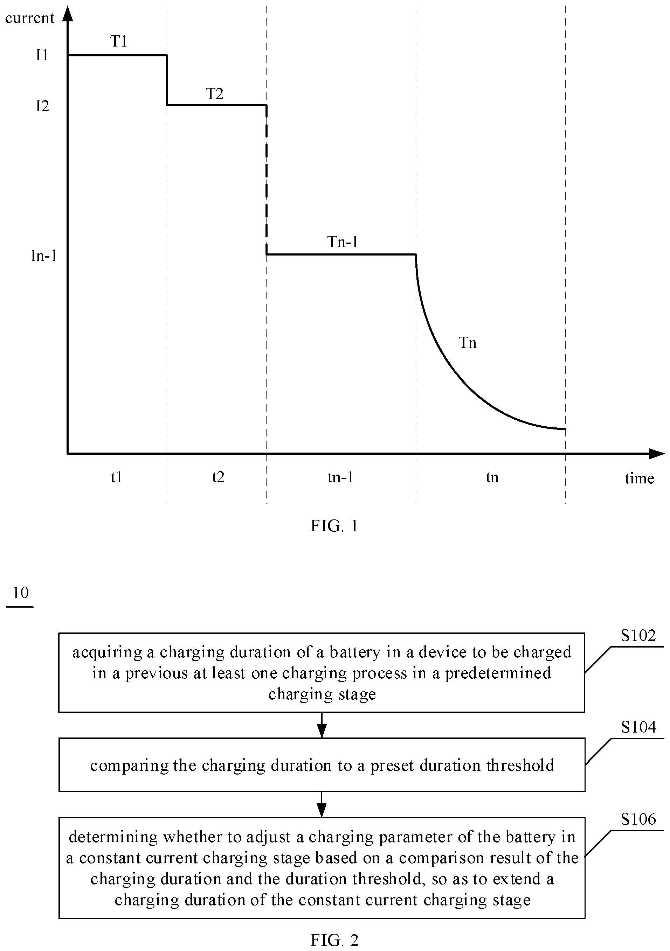

FIG. 1 exemplarily illustrates a schematic diagram of a segmented constant current charging stage and a constant voltage charging stage. The current conversion process between two adjacent constant current sub-stages in FIG. 1 takes the stepped skip manner as an example.

As illustrated in FIG. 1, the constant current charging stage includes n-1 constant current sub-stages, such as T1 to Tn-1. Charging currents corresponding to each of the constant current sub-stages are I1 to In-1, respectively. Charging durations corresponding to each of the constant current sub-stages are t1 to tn-1, respectively. Tn is the constant voltage charging stage. In this stage, the charging current decreases rapidly, and the charging duration corresponding to this stage is tn.

In the related art, the entire charging process (including the constant current charging stage and the constant voltage charging stage) is unchanged. For example, a charging current and a cut-off voltage of each constant current sub-stage are set and will not change during the entire charging process. Therefore, when the battery is aging, a time of the constant current charging stage will be shortened, so the battery charging time will be longer and longer.

Steps of a charging method of exemplary embodiments of the present disclosure will be described in more detail below with reference to the accompanying drawings and embodiments.

FIG. 2 exemplarily illustrates a flowchart of a charging method in an embodiment of the present disclosure. The method of the embodiment of the present disclosure can be applied to any device to be charged.

The device to be charged may be, for example, a terminal or a communication terminal including, but not limited to, a device configured to receive/transmit a communication signal with another communication terminal via a wired line connection, and/or via a wireless network connection. A communication terminal arranged to communicate over a wireless interface may be referred to as a "wireless communication terminal", a "wireless terminal", and/or a "mobile terminal". Examples of the mobile terminals include cell phones, tablets, laptop portable computers, and the like. In addition, the terminal can also include, but is not limited to, rechargeable electronic device with charging capability, such as electronic book readers, smart wearable devices, mobile power supplies (such as power banks, travel chargers), electronic cigarettes, wireless mice, wireless keyboards, wireless headsets, Bluetooth speakers, Moving Picture Experts Group Audio Layer IV (MP4) players, smart home equipment, augmented reality (AR), equipment, virtual reality (VR) equipment, and so on.

Referring to Figure 2, the charging method 10 includes the followings.

In a step S102, a charging duration of a battery in a device to be charged in a previous at least one charging process in a predetermined charging stage is acquired.

The device to be charged can calculate the charging duration of the battery in each charging process in the predetermined charging stage, and store the charging duration in the predetermined charging stage when the charging is completed. The predetermined charging stage can be, for example, the above-mentioned constant voltage charging stage, or can also be the constant current charging stage. In addition, when the constant current charging stage includes the above-mentioned plurality of constant current sub-stages, the predetermined charging stage may also be a last constant current sub-stage of the plurality of constant current sub-stages.

The device to be charged can also store values of the above charging durations for multiple charging processes.

Before charging the battery, the stored charging duration of one or more previous charges may be acquired.

In a step S104, the charging duration is compared to a preset duration threshold

In a step S106, based on a comparison result of the charging duration and the duration threshold, it is determined whether to adjust a charging parameter of the battery in a constant current charging stage to extend a charging duration of the constant current charging stage.

For example, the charging duration is a charging duration of the constant voltage charging stage. In response to the charging duration being greater than the preset duration threshold, that is, the duration of the constant voltage charging stage is too long, the charging duration of the constant current charging stage can be extended by adjusting the charging parameter of the battery in the constant current charging stage, so as to speed up a charging speed of the battery.

Alternatively, the charging duration is a charging duration of the constant current charging stage. In response to the charging duration being less than the preset duration threshold, that is, the duration of the constant current charging stage is shortened, the charging duration of the constant current charging stage can be extended by adjusting the charging parameter of the battery in the constant current charging stage, so as to speed up the charging speed of the battery.

According to the charging method of the embodiments of the present disclosure, by calculating and storing the charging duration of battery in each previous charging process in the predetermined charging stage, an adjustment basis is provided for whether the charging parameter of the constant current charging stage needs to be adjusted during current charging. Thus, the charging duration of the constant current charging stage can be extended, and the charging speed of the battery can be increased. This method allows the battery to be charged at a faster charging speed even if the battery is aged.

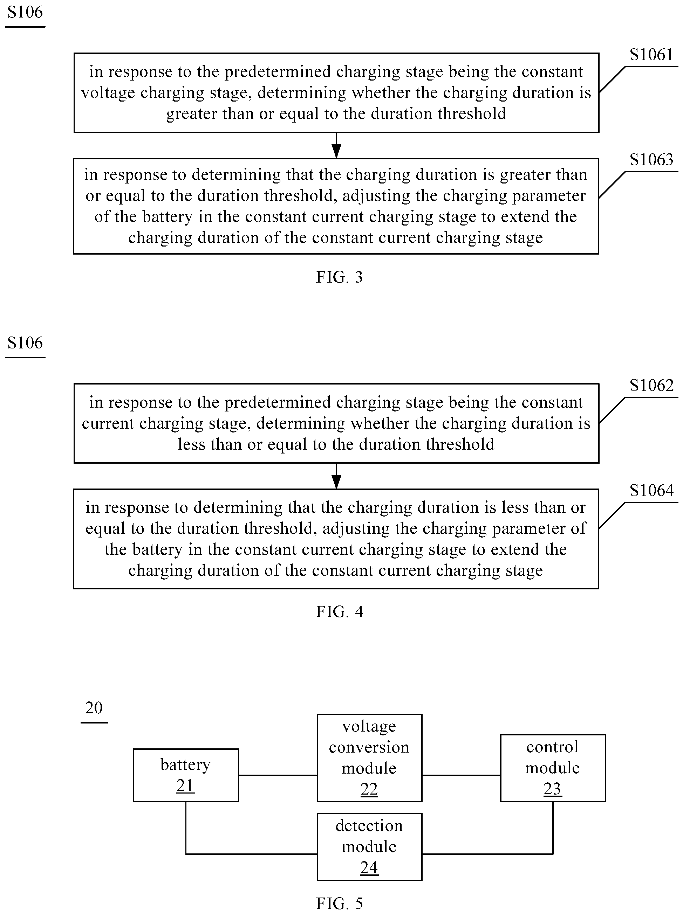

FIG. 3 exemplarily illustrates a flowchart of a charging method in another embodiment of the present disclosure. A difference from the charging method 10 illustrated in FIG. 2 is that the method illustrated in FIG. 3 further provides an embodiment that when the predetermined charging stage is the constant voltage charging stage, how to determine whether to adjust the charging parameter of the battery in the constant current charging stage based on the comparison result of the charging duration and the duration threshold to extend the charging duration of the constant current charging stage. That is, the method illustrated in FIG. 3 is a further extension of the step S106 in FIG. 2.

Referring to FIG. 3, the step S106 includes the following.

In a step S1061, in response to the predetermined charging stage being the constant voltage charging stage, it is determined whether the charging duration is greater than or equal to the duration threshold.

In a step S1063, in response to determining that the charging duration is greater than or equal to the duration threshold, the charging parameter of the battery in the constant current charging stage is adjusted to extend the charging duration of the constant current charging stage.

The charging parameter may include, for example, the charging current and/or the cut-off voltage of the constant current charging stage.

For example, in response to determining that the charging duration is greater than or equal to the duration threshold, the charging current of the constant current charging stage is decreased to extend the charging duration of the constant current charging stage.

Alternatively, in response to determining that the charging duration is greater than or equal to the duration threshold, the cut-off voltage of the constant current charging stage is increased to extend the charging duration of the constant current charging stage.

Alternatively, in response to determining that the charging duration is greater than or equal to the duration threshold, the charging current of the constant current charging stage is decreased, and the cut-off voltage of the constant current charging stage is increased, so as to extend the charging duration of the constant current charging stage.

In some embodiments, the constant current charging stage includes a plurality of constant current sub-stages (as illustrated in FIG. 1, the constant current sub-stages T1 to Tn-1). Each of the constant current sub-stages corresponds to a corresponding charging current and a corresponding cut-off voltage. The step of adjusting the charging parameter of the battery in the constant current charging stage may include adjusting the charging parameter of a last sub-stage (e.g., the constant current sub-stage Tn-1 in FIG. 1) of the plurality of constant current sub-stages. For example, the charging current of the battery in the last constant current sub-stage is reduced. Alternatively, the cut-off voltage of the battery in the last constant current sub-stage is increased. Alternatively, the charging current of the battery in the last constant current sub-stage is reduced, and the cut-off voltage of the battery in the last constant current sub-stage is increased.

It should be noted that, during the current charging, by adjusting the charging parameter of the constant current charging stage, the duration of the constant current charging stage of the current charging is prolonged, and the charging speed of the battery is accelerated. However, due to the continuous aging of the battery, in the next charging process, it may still be necessary to continue to adjust the charging parameters, such as reducing the charging current and/or increasing the cut-off voltage. During the adjustment, for example, the adjustment can be performed in a preset step size. Taking the increase of cut-off voltage as an example, this time a value of one step is increased, and the next time the adjustment is made, a value of one step is increased on the basis of this adjustment.

However, when the cut-off voltage is continuously increased, since the increase of the cut-off voltage will involve the security performance of the battery, in some embodiments, a cut-off voltage threshold may also be preset. When the cut-off voltage of the constant current charging stage is increased to the cut-off voltage threshold, the cut-off voltage will not be increased further in the future.

In some embodiments, a charging current threshold may also be preset. When the charging current of the constant current charging stage is reduced to the charging current threshold, the charging current of the constant current charging stage is no longer reduced.

In addition, in some embodiments, when the plurality of charging durations of previously consecutive multiple charging processes in the plurality of constant current charging stages are acquired, it is determined whether the plurality of charging durations are all greater than or equal to the duration threshold. The above charging parameter is adjusted only when the plurality of charging durations are all greater than or equal to the duration threshold. This method can avoid fluctuations in the charging duration of the constant voltage charging stage when the battery is charged in different scenarios, and improve a judgment accuracy of the charging method.

In addition, in some embodiments, different duration thresholds may also be set based on different temperature intervals. The higher the temperature, the lower the impedance of the battery, and the lower the duration threshold. By setting different duration thresholds based on different temperatures, a problem of slow charging speed due to the impact of temperature on the impedance of the battery can be further solved. Therefore, before the step S 1061, the charging method may further include acquiring a current temperature of the battery, and selecting a duration threshold corresponding to the current temperature to compare the charging duration with the duration threshold. Alternatively, an ambient temperature around the device to be charged can be acquired through elements such as sensors, and different duration thresholds can be set based on the ambient temperature.

FIG. 4 exemplarily illustrates a flowchart of a charging method in a further embodiment of the present disclosure. A difference from the method 10 illustrated in FIG. 2 is that the method illustrated in FIG. 4 further provides an embodiment that when the predetermined charging stage is the constant current charging stage, how to determine whether to adjust the charging parameter of the battery in the constant current charging stage based on the comparison result of the charging duration and the duration threshold to extend the charging duration of the constant current charging stage. That is, the method illustrated in FIG. 4 is a further extension of the step S 106 in FIG. 2.

Referring to FIG. 4, step S106 includes the following.

In a step S 1062, in response to the predetermined charging stage being the constant current charging stage, it is determined whether the charging duration is less than or equal to the duration threshold.

In step S1064, in response to determining that the charging duration is less than or equal to the duration threshold, the charging parameter of the battery in the constant current charging stage is adjusted to extend the charging duration of the constant current charging stage.

The charging parameters may include, for example, the charging current and/or the cut-off voltage of the constant current charging stage.

For example, in response to determining that the charging duration is less than or equal to the duration threshold, the charging current of the constant current charging stage is decreased to extend the charging duration of the constant current charging stage.

Alternatively, in response to determining that the charging duration is less than or equal to the duration threshold, the cut-off voltage of the constant current charging stage is increased to extend the charging duration of the constant current charging stage.

Alternatively, in response to determining that the charging duration is less than or equal to the duration threshold, the charging current of the constant current charging stage is decreased, and the cut-off voltage of the constant current charging stage is increased, so as to extend the charging duration of the constant current charging stage.

In some embodiments, the constant current charging stage includes a plurality of constant current sub-stages (as illustrated in FIG. 1, the constant current sub-stages T1 to Tn-1). Each of the constant current sub-stages corresponds to a corresponding charging current and a corresponding cut-off voltage. The above charging duration is, for example, the charging duration of the last sub-stage (for example, the constant current sub-stages Tn-1 in FIG. 1) of the plurality of constant current sub-stages. Furthermore, the step of adjusting the charging parameter of the battery in the constant current charging stage may include adjusting the charging parameter of the last sub-stage of the plurality of constant current sub-stages. For example, the charging current of the battery in the last constant current sub-stage is reduced. Alternatively, the cut-off voltage of the battery in the last constant current sub-stage is increased. Alternatively, the charging current of the battery in the last constant current sub-stage is reduced, and the cut-off voltage of the battery in the last constant current sub-stage is increased.

It should be noted that, during the current charging, by adjusting the charging parameter of the constant current charging stage, the duration of the constant current charging stage of the current charging is prolonged, and the charging speed of the battery is accelerated. However, due to the continuous aging of the battery, in the next charging process, it may still be necessary to continue to adjust the charging parameters, such as reducing the charging current and/or increasing the cut-off voltage. During the adjustment, for example, the adjustment can be performed in a preset step size. Taking the increase of cut-off voltage as an example, this time a value of one step is increased, and the next time the adjustment is made, a value of one step is increased on the basis of this adjustment.

However, when the cut-off voltage is continuously increased, since the increase of the cut-off voltage will involve the security performance of the battery, in some embodiments, a cut-off voltage threshold may also be preset. When the cut-off voltage of the constant current charging stage is increased to the cut-off voltage threshold, the cut-off voltage will not be increased further in the future.

In addition, in some embodiments, when the plurality of charging durations of previously consecutive multiple charging processes in the constant current charging stages are acquired, it is determined whether the plurality of charging durations are all greater than or equal to the duration threshold. The above charging parameter is adjusted only when the plurality of charging durations are all greater than or equal to the duration threshold. This method can avoid fluctuations in the charging duration of the constant voltage charging stage when the battery is charged in different scenarios, and improve a judgment accuracy of the charging method.

In addition, in some embodiments, different duration thresholds may also be set based on different temperature intervals. The higher the temperature, the lower the impedance of the battery, and the lower the duration threshold. By setting different duration thresholds based on different temperatures, a problem of slow charging speed due to the impact of temperature on the impedance of the battery can be further solved. Therefore, before the step S1062, the charging method may further include acquiring a current temperature of the battery, and selecting a duration threshold corresponding to the current temperature to compare the charging duration with the duration threshold. Alternatively, an ambient temperature around the device to be charged can be acquired through elements such as sensors, and different duration thresholds can be set based on the ambient temperature.

It should be noted that the above-mentioned drawings are only schematic illustrations of the processes included in the methods according to the exemplary embodiments of the present disclosure, and are not intended to be limiting. It is easy to understand that the processes shown in the above drawings do not indicate or limit the chronological order of these processes. In addition, it is also readily understood that these processes may be performed synchronously or asynchronously, for example, in multiple modules.

The following are device embodiments of the present disclosure, which can be used to execute the method embodiments of the present disclosure. For details not disclosed in the device embodiments of the present disclosure, refer to the method embodiments of the present disclosure.

FIG. 5 exemplarily illustrates a block diagram of a device to be charged in an embodiment of the present disclosure.

Referring to FIG. 5, the device to be charged 20 includes a battery 21 and a control module 23.

The battery 21 may be, for example, a lithium battery containing a single battery cell or a lithium battery containing at least two battery cells connected in series. Alternatively, the battery 21 may also include two battery cells connected in series, and each battery cell is a lithium battery containing a single cell or a plurality of cells.

The following is an example of the battery 21 including two battery cells connected in series, and each battery cell including a single cell to explain how the use of multiple battery cells in series can not only increase a charging speed, but also reduce a heat generation of the device to be charged when charging with a large current:

For the device to be charged including a single battery cell, the device to be charged will generate more heat when a relatively large charging current is used to charge the single battery unit. In order to guarantee the charging speed of the device to be charged, and solve the heat generation of the device to be charged during the charging process, the structure of the battery can be modified to use a plurality of battery cells in series, and the plurality of cells are directly charged, i.e., a voltage output by an adapter is directly applied to both ends of each of the plurality of battery cells. Compared with the solution of single battery cell (i.e., the capacity of a single battery cell before modification is considered to be the same as the total capacity of the plurality of battery cells in series after modification), if the same charging speed is to be achieved, the charging current applied to each of the plurality of battery cells is about 1/N of charging current required by a single battery cell. In other words, under the premise of ensuring the same charging speed, the plurality of battery cells in series can greatly reduce the size of the charging current, thereby further reducing the heat generation of the device to be charged in the charging process. Therefore, in order to improve the charging speed and reduce the heat generation of the device to be charged in the charging process, the device to be charged can use plurality of battery units connected in series.

The control module 23 can be implemented by, for example, an independent micro control unit (MCU), or can also be implemented by an application processor (AP) inside the device to be charged 20.

The control module 23 usually stores charging parameters of the battery 21 in the constant current charging stage and the constant voltage charging stage (such as charging currents, cut-off voltages, etc. in different charging stages) to control the charging process with of battery 21.

The control module 23 is connected to the battery 21 to acquire a charging duration of the battery 21 in a previous at least one charging process in a predetermined charging stage, to compare the charging duration to a preset duration threshold, and to determine whether to adjust a charging parameter of the battery 21 in a constant current charging stage to extend a charging duration of the constant current charging stage based on a comparison result of the charging duration and the duration threshold.

In the related art, the charging parameter in the control module 23 is usually not changed. The device to be charged of the embodiment of the present disclosure can provide an adjustment basis for whether the charging parameter of the constant current charging stage needs to be adjusted during current charging by calculating and storing the charging duration of battery in each previous charging process in the predetermined charging stage. Thus, the charging duration of the constant current charging stage can be extended, and the charging speed of the battery can be increased. This method allows the battery to be charged at a faster charging speed even if the battery is aged.

In some embodiments, the device to be charged 20 may further include a voltage conversion module 22 for converting the charging voltage and/or charging current loaded to both ends of the battery 21.

In some embodiments, the predetermined charging stage is a constant voltage charging stage. The control module 23 is configured to determine whether the charging duration is greater than or equal to the duration threshold. In response to determining that the charging duration is greater than or equal to the duration threshold, the control module 23 is configured to adjust the charging parameter of the battery 21 in the constant current charging stage to extend the charging duration of the constant current charging stage.

In some embodiments, the constant current charging stage includes a plurality of constant current sub-stages. In each of the constant current sub-stages, the battery 21 includes a respective charging current and a corresponding cut-off voltage. The control module 23 is configured to adjust the charging parameter of the battery 21 in the last constant current sub-stage of the plurality of constant current sub-stages.

In some embodiments, the charging parameter includes a charging current. The control module 23 is configured to reduce the charging current of the battery 21 in the last constant current sub-stage.

In some embodiments, the charging parameter includes a cut-off voltage. The control module 23 is configured to increase the cut-off voltage of the battery 21 in the last constant current sub-stage.

In some embodiments, the charging parameters include a charging current and a cut-off voltage. The control module 23 is configured to reduce the charging current of the battery 21 in the last constant current sub-stage, and increase the cut-off voltage of the battery 21 in the last constant current sub-stage.

In some embodiments, the control module 23 is further configured to no longer increase the cut-off voltage of the constant current charging stage when the cut-off voltage of the constant current charging stage is increased to a preset cut-off voltage threshold.

In some embodiments, the control module 23 is further configured to no longer reduce the charging current of the constant current charging stage when the charging current of the constant current charging stage is reduced to a preset charging current threshold.

In some embodiments, the duration threshold is preset to different values based on different temperature intervals. The device to be charged 20 further includes a detection module 24 connected with the battery 21 and the control module 23, and configured to detect a temperature of the battery 21. The control module 23 is further configured to acquire the current temperature of the battery 21 detected by the detection module 24, and to select the duration threshold corresponding to the temperature.

In some embodiments, the control module 23 is configured to acquire a plurality of charging durations of the battery 21 in previously consecutive multiple charging processes in the predetermined charging stage. In response to determining that the plurality of the charging durations are all greater than or equal to the duration threshold, the control module is configured to reduce the charging current of the battery in the constant current charging stage and/or to increase the cut-off voltage of the battery in the constant current charging stage.

In some embodiments, the predetermined charging stage is the constant current charging stage. In response to determining that the charging duration is less than or equal to the duration threshold, the control module 23 is configured to adjust the charging parameter of the battery 21 in the constant current charging stage to extend the charging duration of the constant current charging stage.

In some embodiments, the constant current charging stage includes a plurality of constant current sub-stages, and in each of the constant current sub-stages, the battery 21 includes a respective charging current and a corresponding cut-off voltage. The charging duration is a charging duration of a last constant current sub-stage of the plurality of constant current sub-stages.

In some embodiments, the charging parameters include the charging current and/or the cut-off voltage.

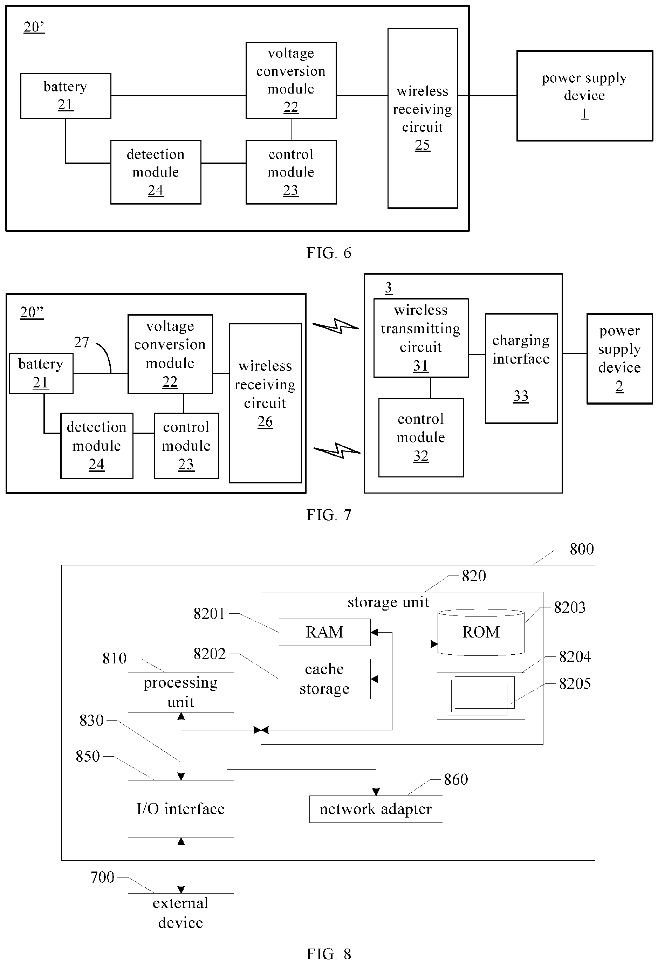

FIG. 6 exemplarily illustrates a schematic diagram of an application scenario of device to be charged in an embodiment of the present disclosure.

In this scenario, a device to be charged 20' is charged by wire.

A difference from the device to be charged 20 illustrated in FIG. 5 is that the device to be charged 20' further includes a charging interface 25.

Referring to FIG. 6, the device to be charged 20' is connected to a power supply device 1 through the charging interface 25 to charge the battery 21. The power supply device 1 is, for example, a power adapter, a mobile power bank, and other equipment.

The charging interface 25 may be, for example, a USB 2.0 interface, a Micro USB interface, or a USB TYPE-C interface. In some embodiments, the charging interface 25 may also be a lightning interface, or any other type of parallel port or serial port that can be used for charging.

If the charging interface 25 is the USB interface, the device to be charged 20' and the power supply device 1 can communicate based on data lines (such as D+ and/or D- lines) in the USB interface. Another example is that the charging interface 25 is a USB interface (such as the USB TYPE-C interface) that supports the Power Delivery (PD) communication protocol, and the device to be charged 20' and the power supply device 1 can communicate based on the PD communication protocol.

In addition, the device to be charged 20' can also communicate with the power supply device 1 through other communication methods other than the charging interface 25. For example, the device to be charged 20' can communicate with the power supply device 1 in a wireless manner, such as Near Field Communication (NFC).

Functions of the modules with the same reference numerals in the device to be charged 20' are the same as that in the device to be charged 20, so they will not be repeated here.

The control module 23 can, for example, reduce the charging current of the constant current charging stage by controlling the voltage conversion module 22.

In addition, the device to be charged 20' can also communicate with the power supply device 1 through the charging interface 25, for example, and request the power supply device 1 to adjust its output power to reduce the charging current of the constant current charging stage.

In a wired charging process, the device to be charged 20' is connected to the power supply device 1 through a cable, receives an electric energy output by the power supply device 1, and charges the battery 21 in it. In the charging process, the device to be charged 20' can calculate and store the charging duration of the battery in each previous charging process in the predetermined charging stage by executing the charging methods of the embodiments of the present disclosure to provide an adjustment basis for whether the charging parameter of the constant current charging stage needs to be adjusted during the current charging, so that the charging duration of the constant current charging stage can be extended and the charging speed of the battery can be accelerated. This method allows the battery to be charged at a faster charging speed even if the battery is aged.

FIG. 7 exemplarily illustrates a schematic diagram of another application scenario of the device to be charged in an embodiment of the present disclosure.

In this scenario, a device to be charged 20" is charged by wireless charging.

A difference from the device to be charged 20 illustrated in FIG. 5 is that the device to be charged 20" further includes a wireless receiving circuit 26.

Referring to FIG. 7, after a power supply device 2 is connected to a wireless charging device 3 through a cable, it transmits an output current to the wireless charging device 3, and the wireless charging device 3 wirelessly charges the device to be charged 20".

The power supply device 2 can also be, for example, a power adapter, a power bank, or other devices. The wireless charging device 3 may be, for example, a wireless charging base.

The wireless charging device 3 includes a wireless transmitting circuit 31 and a control module 32.

The wireless transmitting circuit 31 is configured to convert an electrical energy output by the power supply device 2 into electromagnetic signals (or electromagnetic waves) for transmission, so as to wirelessly charge the device to be charged 20". For example, the wireless transmitting circuit 31 may include: a wireless transmission driving circuit and a transmitting coil (or a transmitting antenna). The wireless transmitting drive circuit is configured to convert a direct current output from the power supply device 2 into a high-frequency alternating current, and convert the high-frequency alternating current into the electromagnetic signals (or the electromagnetic waves) through the transmitting coil or the transmitting antenna for transmission.

The control module 32 can be implemented by, for example, an MCU, and can be used for wireless communication with the device to be charged 20" during the process of wireless charging the device to be charged 20" by the wireless charging device 3.

In addition, the wireless charging device 3 may further include a charging interface 33. The wireless transmitting circuit 31 can also be configured to receive the power output by the power supply device 2 through the charging interface 33, and generate electromagnetic signals (or electromagnetic waves) according to the power output by the power supply device 2.

The charging interface 33 can be, for example, a USB 2.0 interface, a Micro USB interface, or a USB TYPE-C interface. In some embodiments, the charging interface 33 may also be a lightning interface, or any other type of parallel port or serial port that can be used for charging.

The wireless charging device 3 can communicate with the power supply device 2, for example, through the charging interface 33, without setting an additional communication interface or other wireless communication modules, which can simplify the implementation of the wireless charging device 3. If the charging interface 33 is the USB interface, the wireless charging device 3 (or the wireless transmitting circuit 31 ) and the power supply device 2 can communicate based on data lines (such as D+ and/or D- lines) in the USB interface. Another example is that the charging interface 33 is a USB interface (such as the USB TYPE-C interface) that supports the Power Delivery (PD) communication protocol, and the wireless charging device 3 (or the wireless transmitting circuit 31) and the power supply device 2 can communicate based on the PD communication protocol.

In addition, the wireless charging device 3 can also communicate with the power supply device 2 through other communication methods other than the charging interface 33. For example, the wireless charging device 3 may communicate with the power supply device 2 in a wireless manner, such as near field communication (NFC).

The wireless receiving circuit 26 in the device to be charged 20" is configured to receive the electromagnetic signals (or the electromagnetic waves) transmitted by the wireless transmitting circuit 31, and convert the electromagnetic signals (or electromagnetic waves) into a direct current output by the wireless receiving circuit 26. For example, the wireless receiving circuit 26 may include a receiving coil or a receiving antenna and a shaping circuit such as a rectifying circuit and/or a filtering circuit connected to the receiving coil or the receiving antenna. The wireless receiving circuit 26 converts the electromagnetic signals (or the electromagnetic waves) transmitted by the wireless transmitting circuit 31 into an alternating current through the receiving coil or the receiving antenna. The alternating current is rectified and/or filtered through the shaping circuit. Thus, the alternating current is converted into a stable direct current to charge the battery 21.

It should be noted that the embodiments of the present disclosure do not specifically limit the specific form of the shaping circuit and the form of the output voltage and output current of the wireless receiving circuit 26 obtained after shaping by the shaping circuit.

The control module 23 can also be used for wireless communication with the control module 32 in the wireless charging device 3, so as to feedback information (such as the detected voltage value and/or current value on a charging channel 27, a remaining power or a preset charging time of the battery 21, etc.) to the wireless charging device 3. Furthermore, error information and termination transmission information can also be feedback to the control module 32. In addition, the feedback information may also include voltage and/or current adjustment instructions determined by the device to be charged 20" according to the detected voltage value and/or the current value on the charging channel 27, the remaining power or the preset charging time and other information.

The power supply device 2 can be a power supply device with a fixed output power, or a power supply device with an adjustable output power. A voltage feedback loop and a current feedback loop can be set inside the power supply device with adjustable output power, so that its output voltage and/or output current can be adjusted according to actual needs.

As mentioned above, the wireless charging device 3 can continuously adjust the transmission power of the wireless transmitting circuit 31 during the charging process, to make the output voltage and/or output current of the charging channel 27 match the current charging stage of the battery 21 (such as the above-mentioned constant current charging stage and the constant voltage charging stage).

In some embodiments, the control module 32 may adjust a power quantity drawn by the wireless transmitting circuit 31 from the maximum output power supplied by the power supply device 2, so as to adjust the transmitting power of the wireless transmitter circuit 31. That is, a control right of the transmission power adjustment of the wireless transmitting circuit 31 is assigned to the control module 32. The control module 32 can adjust the transmission power of the wireless transmitting circuit 31 by adjusting the power quantity extracted from the maximum output power after receiving the feedback information of the device to be charged 20", which has advantages of fast adjustment speed and high efficiency.

For example, a power adjustment circuit may be provided inside the control module 32, inside the wireless transmitting circuit 31, or between the control module 32 and the wireless transmitting circuit 31. The power adjustment circuit may include, for example, a pulse width modulation (PWM) controller and a switch unit. The control module 32 can adjust the transmission power of the wireless transmitting circuit 31 by adjusting a duty of the control signal sent by the PWM controller, and/or by controlling a switching frequency of the switching unit.

Alternatively, in other embodiments, the control module 32 may adjust the output voltage and/or the output current of the power supply device 2 by communicating with the power supply device 2, thereby adjusting the transmission power of the wireless transmitting circuit 31. That is, the control right of the transmission power adjustment of the wireless transmitting circuit 31 is assigned to the power supply device 2. The transmission power of the wireless transmitting circuit 31 is adjusted by the power supply device 2 by changing the output voltage and/or the output current. An advantage of this adjustment method is that the wireless charging device 12 provides as much power as the power supply device 2 needs, and there is no waste of power.

Functions of the modules with the same reference numerals in the device to be charged 20" are the same as that in the device to be charged 20, so they will not be repeated here.

The control module 23 can, for example, reduce the charging current of the constant current charging stage by controlling the voltage conversion module 22.

In addition, the device to be charged 20" may, for example, communicate with the wireless charging device 3 to request the wireless charging device 3 to adjust the transmission power of its wireless transmitting circuit 31 to reduce the charging current of the constant current charging stage.

Alternatively, the wireless charging device 3 can also request the power supply device 2 to adjust its output power by communicating with the power supply device 2 after receiving the request from the device to be charged 20", so as to reduce the charging current of the constant current charging stage.

In the wireless charging process, the device to be charged20" receives the electrical energy output by the power supply device 2 through the wireless charging device 3, and charges the battery 21 in it. In the charging process, by executing the charging methods of the embodiments of the present disclosure, the device to be charged 20" can count and store the charging duration of the battery in each previous charging process in the predetermined charging stage, to provide an adjustment basis for whether the charging parameter of the constant current charging stage needs to be adjusted during current charging. Therefore, the charging duration of the constant current charging stage can be extended, and the charging speed of the battery can be accelerated. This method allows the battery to be charged at a faster charging speed even if the battery is aged.

It is to be noted that the block diagram illustrated in the above drawing is a functional entity and does not necessarily have to correspond to a physically or logically independent entity. These functional entities may be implemented in software form or implemented in one or more hardware modules or integrated circuits, or these functional entities are implemented in different networks and/or processor devices and/or micro-controllers.

A person skilled in the art can understand that various aspects of this application may be implemented as systems, methods, or program products. Therefore, each aspect of this application may be specifically implemented in the following forms, that is, the implementation form of complete hardware, complete software (including firmware and microcode), or a combination of hardware and software, which may be uniformly referred to as "circuit", "module", or "system" herein.

The embodiments of the present disclosure further provide a device for executing the charging method disclosed in the above method embodiments of the present disclosure.

An electronic device 800 according to this embodiment of the present disclosure is described below with reference to FIG. 8. The electronic device 800 illustrated in FIG. 8 is only an example, and does not impose any limitation on the functions and scope of use of the embodiments of the present disclosure.

As illustrated in FIG. 8, the electronic device 800 is represented in a form of a general-purpose computing device. Components of the electronic device 800 may include, but are not limited to, at least one processing unit 810, at least one storage unit 820, and a bus 830 connected to different system components (including the storage unit 820 and the processing unit 810).

The storage unit stores program code, and the program code may be executed by the processing unit 810, so that the processing unit 810 performs the steps according to various exemplary implementations of the present disclosure described in the foregoing embodiments of this specification. For example, the processing unit 810 may perform the step S102 illustrated in FIG. 1 of acquiring a charging duration of a battery in a device to be charged in a previous at least one charging process in a predetermined charging stage; perform the step S104 of comparing the charging duration to a preset duration threshold; and perform the step S106 of determining whether to adjust a charging parameter of the battery in a constant current charging stage to extend a charging duration of the constant current charging stage based on a comparison result of the charging duration and the duration threshold.

The storage unit 820 may include a readable medium in the form of a volatile storage unit, for example, a random access memory (RAM) 8201 and/or a cache storage unit 8202, and may further include a read-only memory (ROM) 8203.

The storage unit 820 may further include a program/utility tool 8204 having a group of (at least one) program modules 8205. Such a program module 8205 includes, but is not limited to, an operating system, one or more application programs, other program modules, and program data. Each or a combination of these examples may include implementation of a network environment.

The bus 830 may represent one or more of several types of bus structures, including a storage unit bus or a storage unit controller, a peripheral bus, an accelerated graphics port, a processing unit, or a local bus using any bus structure in a plurality of types of bus structures.

The electronic device 800 may alternatively communicate with one or more external devices 700 (for example, a keyboard, a pointing device, and a Bluetooth device), or may communicate with one or more devices that enable a user to interact with the electronic device 600 and/or communicate with any device (for example, a router or a modem) that enables the electronic device 800 to communicate with one or more other computing devices. Such communication may be performed by using an input/output (I/O) interface 650. In addition, the electronic device 800 may further communicate with one or more networks (for example, a local area network (LAN), a wide area network (WAN), and/or a public network such as the Internet) through a network adapter 860. As illustrated in the figure, the network adapter 860 communicates with other modules of the electronic device 800 by using the bus 830. It is to be understood that although not illustrated in the figure, other hardware and/or software modules may be used in combination with the electronic device 600, including, but not limited to microcode, a device drive, a redundancy processing unit, an external disk drive array, a RAID system, a tape drive, a data backup and storage system, and the like.

Through descriptions of the foregoing implementations, a person skilled in the art can easily understand that the exemplary implementations described herein may be implemented by software or by combining software with necessary hardware. Therefore, the technical solutions of the implementations of the present disclosure may be implemented in the form of a software product. The software product may be stored in a non-volatile storage medium (which may be a CD-ROM, a USB, a removable hard disk, or the like) or in a network and includes several instructions for instructing a computer device (which may be a personal computer, a server, a terminal apparatus, a network device, or the like) to perform the methods described in the implementations of the present disclosure.

In an exemplary embodiment of the present disclosure, a computer-readable storage medium is further provided, on which a program product capable of implementing the above methods of the present disclosure is stored. In some possible implementations, various aspects of the present disclosure can also be implemented in the form of a program product, which includes program codes. When the program product runs on a terminal device, the program code causes the terminal device to perform the steps according to various exemplary implementations of the present disclosure described in the foregoing embodiments of this specification.

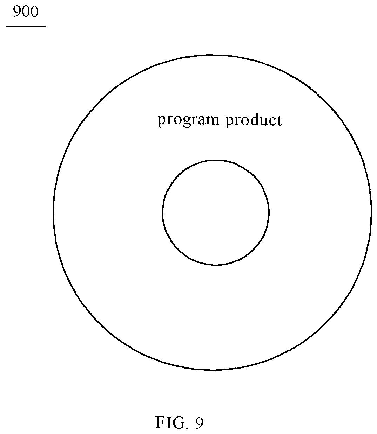

Referring to FIG. 9, a program product 900 for implementing the methods in the foregoing method embodiments is further provided. The program product may use a portable CD-ROM and include program code, and may be run on a terminal device such as a personal computer. However, the program product in the present disclosure is not limited thereto. In this specification, the readable storage medium may be any tangible medium including or storing a program, and the program may be used by or used in combination with an instruction execution system, an apparatus, or a device.

The program product may use any combination of one or more readable media. The readable medium may be a readable signal medium or a readable storage medium. The readable storage medium may be, for example, but not limited to, an electric, magnetic, optical, electromagnetic, infrared, or semi-conductive system, apparatus, or device, or any combination thereof. More specific examples (a non-exhaustive list) of the readable storage medium may include: an electrical connection having one or more wires, a portable disk, a hard disk, a RAM, a ROM, an erasable programmable ROM (EPROM or flash memory), an optical fiber, a portable CD-ROM, an optical storage device, a magnetic storage device, or any appropriate combination thereof.

The computer-readable signal medium may include a data signal propagated in a baseband or as part of a carrier, and stores readable program code. The propagated data signal may be in a plurality of forms, including, but not limited to, an electromagnetic signal, an optical signal, or any appropriate combination thereof. The readable signal medium may alternatively be any readable medium other than the readable storage medium. The readable medium may transmit, propagate, or transmit a program configured to be used by or in combination with an instruction execution system, apparatus, or device.

The program code included in the readable medium may be transmitted by using any suitable medium, including but not limited to, via wireless transmission, a wire, a cable, radio frequency (RF), or the like, or any suitable combination thereof.

The program code used for executing the operations of the present disclosure may be written by using one or more programming languages or a combination thereof. The programming languages include an object-oriented programming language such as Java and C++, and also include a conventional procedural programming language such as "C" language or similar programming languages. The program code may be completely executed on a user computing device, partially executed on user equipment, executed as an independent software package, partially executed on a user computing device and partially executed on a remote computing device, or completely executed on a remote computing device or server. For the case involving a remote computing device, the remote computing device may be connected to a user computing device through any type of network including a LAN or a WAN, or may be connected to an external computing device (for example, through the Internet by using an Internet service provider).

Although several modules or units of a device for action execution are mentioned in the foregoing detailed descriptions, the division is not mandatory. Actually, according to the implementations of the present disclosure, features and functions of the two or more modules or units described above may be embodied in one module or unit. Conversely, the features and functions of one module or unit described above may be further divided into a plurality of modules or units to be embodied.

In addition, although the steps of the method in the present disclosure are described in the accompanying drawings in a specific sequence, this does not require or imply that these steps need to be performed according to the specific sequence, or all illustrated steps need to be performed to achieve an expected result. Additionally or alternatively, some steps may be omitted, a plurality of steps are combined into one step, and/or one step is decomposed into a plurality of steps for execution, and the like.

Through the description of the above embodiments, those skilled in the art can easily understand that the example embodiments described herein can be implemented by software, or by software in combination with necessary hardware. Therefore, the technical solution according to embodiments may be implemented in the form of a software product, which may be stored in a non-volatile storage medium (which may be a CD-ROM, a USB, a removable hard disk, etc.) or on a network and includes several instructions to cause a computing device (which may be a personal computer, a server, a mobile terminal, or a network device, etc.) to execute the method according to embodiments of the present disclosure.

After considering the specification and practicing the present disclosure, a person skilled in the art would easily conceive of other implementations of the present disclosure. This application is intended to cover any variations, uses, or adaptive changes of the present disclosure. These variations, uses, or adaptive changes follow the general principles of the present disclosure and include common knowledge or conventional technical means in the technical field not disclosed in the present disclosure. The description and the embodiments are only regarded as exemplary, and the true scope and spirit of the present disclosure are indicated by the appended claims.

## Claims

1. A charging method, **characterized in that**, the charging method comprises:
acquiring a charging duration of a battery in a device to be charged in a previous at least one charging process in a predetermined charging stage;
comparing the charging duration to a preset duration threshold; and
determining whether to adjust a charging parameter of the battery in a constant current charging stage based on a comparison result of the charging duration and the duration threshold, so as to extend a charging duration of the constant current charging stage.

2. The method according to claim 1, **characterized in that**, the predetermined charging stage is a constant voltage charging stage, and the determining whether to adjust the charging parameter of the battery in the constant current charging stage based on the comparison result of the charging duration and the duration threshold to extend the charging duration of the constant current charging stage comprises:
in response to determining that the charging duration is greater than or equal to the duration threshold, adjusting the charging parameter of the battery in the constant current charging stage to extend the charging duration of the constant current charging stage;
wherein the adjusting the charging parameter of the battery in the constant current charging stage comprises reducing a charging current of the constant current charging stage and/or increasing a cut-off voltage of the constant current charging stage.

3. The method according to claim 2, **characterized in that**, the constant current charging stage comprises a plurality of constant current sub-stages, and in each of the constant current sub-stages, the battery comprises a respective charging current and a corresponding cut-off voltage;
the adjusting the charging parameter of the battery in the constant current charging stage comprises adjusting the charging parameter of the battery in a last constant current sub-stage of the plurality of constant current sub-stages.

4. The method according to claim 3, **characterized in that**, the charging parameter comprises a charging current;
the adjusting the charging parameter of the battery in the last constant current sub-stage of the plurality of constant current sub-stages comprises reducing the charging current of the battery in the last constant current sub-stage.

5. The method according to claim 3, **characterized in that**, the charging parameter comprises a cut-off voltage;
the adjusting the charging parameter of the battery in the last constant current sub-stage of the plurality of constant current sub-stages comprises increasing the cut-off voltage of the battery in the last constant current sub-stage.

6. The method according to claim 3, **characterized in that**, the charging parameter comprises a charging current and a cut-off voltage;
the adjusting the charging parameter of the battery in the last constant current sub-stage of the plurality of constant current sub-stages comprises reducing the charging current of the battery in the last constant current sub-stage, and increasing the cut-off voltage of the battery in the last constant current sub-stage.

7. The method according to any one of claims 2-6, **characterized in that**, the method further comprises:
in response to the cut-off voltage of the constant current charging stage being increased to a preset cut-off voltage threshold, the cut-off voltage of the constant current charging stage is no longer increased.

8. The method according to any one of claims 2-6, **characterized in that**, the method further comprises:
in response to the charging current of the constant current charging stage being decreased to a preset charging current threshold, the charging current of the constant current charging stage is no longer decreased.

9. The method according to any one of claims 1-6, **characterized in that**, the duration threshold is preset to different values based on different temperature intervals, and before comparing the charging duration to the preset duration threshold, the method further comprises:
acquiring a current temperature of the battery; and
selecting the duration threshold corresponding to the temperature.

10. The method according to any one of claims 2-6, **characterized in that**, the acquiring the charging duration of the battery in the device to be charged in the previous at least one charging process in the predetermined charging stage comprises:
acquiring a plurality of charging durations of the battery in previously consecutive multiple charging processes in the predetermined charging stage;
in response to determining that the charging duration is greater than or equal to the duration threshold, the adjusting the charging parameter of the battery in the constant current charging stage comprises:
in response to determining that the plurality of the charging durations are all greater than or equal to the duration threshold, adjusting the charging parameter of the battery in the constant current charging stage.

11. The method according to claim 1, **characterized in that**, the predetermined charging stage is the constant current charging stage, and the determining whether to adjust the charging parameter of the battery in the constant current charging stage based on the comparison result of the charging duration and the duration threshold to extend the charging duration of the constant current charging stage comprises:
in response to determining that the charging duration is less than or equal to the duration threshold, adjusting the charging parameter of the battery in the constant current charging stage to extend the charging duration of the constant current charging stage;
wherein the adjusting the charging parameter of the battery in the constant current charging stage comprises reducing a charging current of the constant current charging stage and/or increasing a cut-off voltage of the constant current charging stage.

12. The method according to claim 11, **characterized in that**, the constant current charging stage comprises a plurality of constant current sub-stages, and in each of the constant current sub-stages, the battery comprises a respective charging current and a corresponding cut-off voltage; and the charging duration is a charging duration of a last constant current sub-stage of the plurality of constant current sub-stages.

13. A device to be charged, **characterized in** comprising: a battery and a control module, the control module is connected to the battery, and is configured to acquire a charging duration of the battery in a previous at least one charging process in a predetermined charging stage, to compare the charging duration to a preset duration threshold, and to determine whether to adjust a charging parameter of the battery in a constant current charging stage based on a comparison result of the charging duration and the duration threshold, so as to extend a charging duration of the constant current charging stage.

14. The device to be charged according to claim 13, **characterized in that**, the predetermined charging stage is a constant voltage charging stage, and in response to determining that the charging duration is greater than or equal to the duration threshold, the control module is configured to reduce a charging current of the battery in the constant current charging stage and/or to increase a cut-off voltage of the battery in the constant current charging stage to extend the charging duration of the constant current charging stage.

15. The device to be charged according to claim 14, **characterized in that**, the constant current charging stage comprises a plurality of constant current sub-stages, and in each of the constant current sub-stages, the battery comprises a respective charging current and a corresponding cut-off voltage; and
the control module is configured to adjust the charging parameter of the battery in a last constant current sub-stage of the plurality of constant current sub-stages.

16. The device to be charged according to claim 15, **characterized in that**, the charging parameter comprises a charging current, and the control module is configured to reduce the charging current of the battery in the last constant current sub-stage.

17. The device to be charged according to claim 15, **characterized in that**, the charging parameter comprises a cut-off voltage, and the control module is configured to increase the cut-off voltage of the battery in the last constant current sub-stage.

18. The device to be charged according to claim 15, **characterized in that**, the charging parameter comprises a charging current and a cut-off voltage, and the control module is configured to reduce the charging current of the battery in the last constant current sub-stage, and to increase the cut-off voltage of the battery in the last constant current sub-stage.

19. The device to be charged according to any one of claims 14-18, **characterized in that**, in response to the cut-off voltage of the constant current charging stage being increased to a preset cut-off voltage threshold, the control module is further configured to no longer increase the cut-off voltage of the constant current charging stage.

20. The device to be charged according to any one of claims 14-18, **characterized in that**, in response to the charging current of the constant current charging stage being decreased to a preset charging current threshold, the control module is further configured to no longer decrease the charging current of the constant current charging stage.

21. The device to be charged according to any one of claims 13-18, **characterized in that**, the duration threshold is preset to different values based on different temperature intervals;
the device to be charged further comprises a detection module connected with the battery and the control module, and configured to detect a temperature of the battery; and
the control module is further configured to acquire the current temperature of the battery detected by the detection module, and to select the duration threshold corresponding to the temperature.

22. The device to be charged according to any one of claims 14-18, **characterized in that**, the control module is configured to acquire a plurality of charging durations of the battery in previously consecutive multiple charging processes in the predetermined charging stage; and
in response to determining that the plurality of the charging durations are all greater than or equal to the duration threshold, the control module is configured to reduce the charging current of the battery in the constant current charging stage and/or to increase the cut-off voltage of the battery in the constant current charging stage.

23. The device to be charged according to claim 13, **characterized in that**, the predetermined charging stage is the constant current charging stage, and in response to determining that the charging duration is less than or equal to the duration threshold, the control module is configured to reduce the charging current in the constant current charging stage and/or to increase the cut-off voltage in the constant current charging stage to extend the charging duration of the constant current charging stage.

24. The device to be charged according to claim 23, **characterized in that**, the constant current charging stage comprises a plurality of constant current sub-stages, and in each of the constant current sub-stages, the battery comprises a respective charging current and a corresponding cut-off voltage; and the charging duration is a charging duration of a last constant current sub-stage of the plurality of constant current sub-stages.
